# EUROPEAN PATENT APPLICATION

(11) **EP 1 041 742 A2**
(43) Date of publication of application: **04.10.2000**
(21) Application number: 00106338.7
(22) Date of filing: 23.03.2000
(51) Int. Cl.: H04B 7/26, H04B 17/00

(54) **Apparatus and method for detecting a monitoring time interval in a frame structure**

(30) Priority: 31.03.1999 JP 9413499
(71) Applicant: MATSUSHITA ELECTRIC INDUSTRIAL CO., LTD., Kadoma-shi, Osaka 571-8501 (JP)
(72) Inventor: Aizawa, Junichi, Yokohama-shi, Kanagawa 240-0033 (JP); Uesugi, Mitsuru, Yokosuka-shi, Kanagawa 238-0048 (JP)
(74) Representative: Grünecker, Kinkeldey, Stockmair & Schwanhäusser Anwaltssozietät

(57) **Abstract**

Frame assembly circuit 103 assembles voice data into frames. Silent interval identifier 104 identifies an interval during which no voice data is input, that is, a silent interval as a monitoring time. Modulator 107 modulates the frames and spreader 108 spreads the modulated frames. Radio circuit 109 carries out predetermined radio processing on the spread frames and the frames subjected to radio processing are transmitted from transmission antenna 110. When silent interval identifier 104 identifies the monitoring time, silent interval identifier 104 outputs a control signal notifying the receiver of the identification of the monitoring time.

## Description

### BACKGROUND OF THE INVENTION

### Field of the Invention

The present invention relates to an apparatus and method for radio communications in a CDMA radio communication system.

### Description of the Related Art

In a CDMA radio communication system, use of compressed mode can simplify the configuration of a mobile station apparatus. Here, "compressed mode" refers to a communication method as follows. That is, first, a base station generates a certain interval between frames of information data by temporarily reducing a spreading factor for the frames, then sends these frames of information data. On the other hand, a mobile station uses this reserved interval (hereinafter referred to as "monitoring time") to check control data sent from another base station (hereinafter referred to as "other base station") that exists in a cell adjacent to the cell in which the mobile station exists.

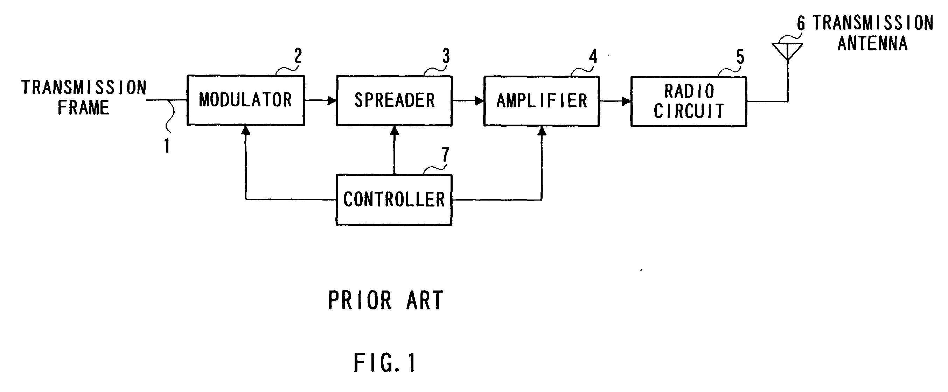

FIG.1 is a block diagram showing a configuration of a conventional transmission apparatus of the base station when the compressed mode is used in the CDMA radio communication system. In FIG. 1, transmission frame 1 is modulated by modulator 2 and spread by spreader 3. The frame spread by spreader 3 is subjected to amplification processing, which will be described later, by amplifier 4, then subjected to predetermined radio processing by radio circuit 5 and transmitted from transmission antenna 6.

Controller 7 outputs a control signal to temporarily reduce the spreading factor to spreader 3 at a predetermined timing. When this control signal is output, spreader 3 temporarily reduces the spreading factor and spreads the frame with this reduced spreading factor.

On the other hand, controller 7 outputs to amplifier 4 a signal notifying the frame for which the spreading factor has been reduced. Based on this signal, amplifier 4 increases the amplification factor for the frame that has been spread with the reduced spreading factor. The power of the frame spread with the reduced spreading factor is increased and the energy of the frame is maintained constant in this way, which prevents deterioration of the communication quality.

Furthermore, controller 7 outputs to modulator 2 a signal notifying the mobile station that a monitoring time has been generated by reducing the spreading factor. That signal is modulated by modulator 2, spread by spreader 3, subjected to predetermined radio processing by radio circuit 5 and transmitted from transmission antenna 6. The mobile station detects the presence of the monitoring time by means of that signal and checks another control signal sent from the other base station during the monitoring time.

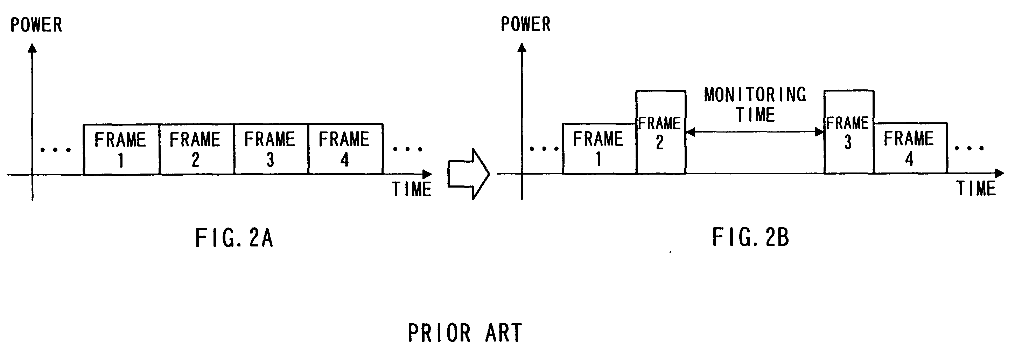

FIG.2A and FIG.2B illustrate the state of conventional frames spread in compressed mode. Transmission frames are input to spreader 3 and amplifier 4 one by one, frame 1 first. Spreader 3 spreads frame 2 and frame 3 with a spreading factor, which is temporarily reduced based on the control signal output from controller 7.

Amplifier 4 amplifies frame 2 and frame 3 with an increased amplification factor. This increases the power of frame 2 and frame 3 and keeps the energy of frame 2 and frame 3 constant, which prevents deterioration of the communication quality of frame 2 and frame 3. For example, in the case that frame 2 and frame 3 are spread with a spreading factor 1/2 of the spreading factor for other frames, the power of frame 2 and frame 3 doubles the power of other frames.

Such spreading and amplification result in a state of frames as shown in FIG.2B with a monitoring time generated between frame 2 and frame 3.

However, the conventional compressed mode above increases the power of frame 2 and frame 3. Therefore, signals of frame 2 and frame 3 become interference in communications with other mobile stations. Thus, the signals of frame 2 and frame 3 deteriorate the communication quality of communications carried out by other mobile stations.

### SUMMARY OF THE INVENTION

It is an objective of the present invention to provide an apparatus and method for radio communications capable of generating a monitoring time with the configuration of the apparatus not complicated, without deteriorating the communication quality of communications carried out by other mobile stations.

The present inventors have come to implement the present invention paying attention to the fact that there is a free time interval between transmission frames and discovering that using that free time interval as a monitoring time will make it possible to generate the monitoring time while maintaining the communication quality without increasing the power of frames spread with a reduced spreading factor.

In order to achieve the objective above, the present invention uses a free time interval between transmission frames produced by the absence of transmission data, in other words, no-transmission interval as the monitoring time.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing a configuration of a conventional transmission apparatus of a base station in a CDMA radio communication system when compressed mode is used;
FIG.2A illustrates a state of conventional frames spread in compressed mode;
FIG.2B illustrates a state of conventional frames spread in compressed mode;
FIG.3A is a block diagram showing a configuration of a radio communication apparatus according to Embodiment 1 of the present invention;
FIG.3B is a block diagram showing a configuration of a radio communication apparatus according to Embodiment 1 of the present invention;
FIG.4 is a block diagram showing a configuration of a buffer of the radio communication apparatus according to Embodiment 1 of the present invention;
FIG.5 illustrates a state of frames when a monitoring time is generated between frames using the radio communication apparatus according to Embodiment 1 of the present invention;
FIG.6A illustrates a state of packets when a monitoring time is generated between packets using the radio communication apparatus according to Embodiment 1 of the present invention;
FIG.6B illustrates a state of packets when a monitoring time is generated between packets using the radio communication apparatus according to Embodiment 1 of the present invention;
FIG.7A is a block diagram showing a configuration of a radio communication apparatus according to Embodiment 2 of the present invention;
FIG.7B is a block diagram showing a configuration of a radio communication apparatus according to Embodiment 2 of the present invention;
FIG.8 is a block diagram showing a configuration of a bit selector of the radio communication apparatus according to Embodiment 2 of the present invention;
FIG.9A illustrates a state of frames when a monitoring time is generated between frames using the radio communication apparatus according to Embodiment 2 of the present invention; and,
FIG.9B illustrates a state of frames when a monitoring time is generated between frames using the radio communication apparatus according to Embodiment 2 of the present invention.

### DETAILED DESCRIPTION OF THE PREFERRED EMBODIMENTS

With reference now to the attached drawings, the embodiments of the present invention are explained in detail below.

### (Embodiment 1)

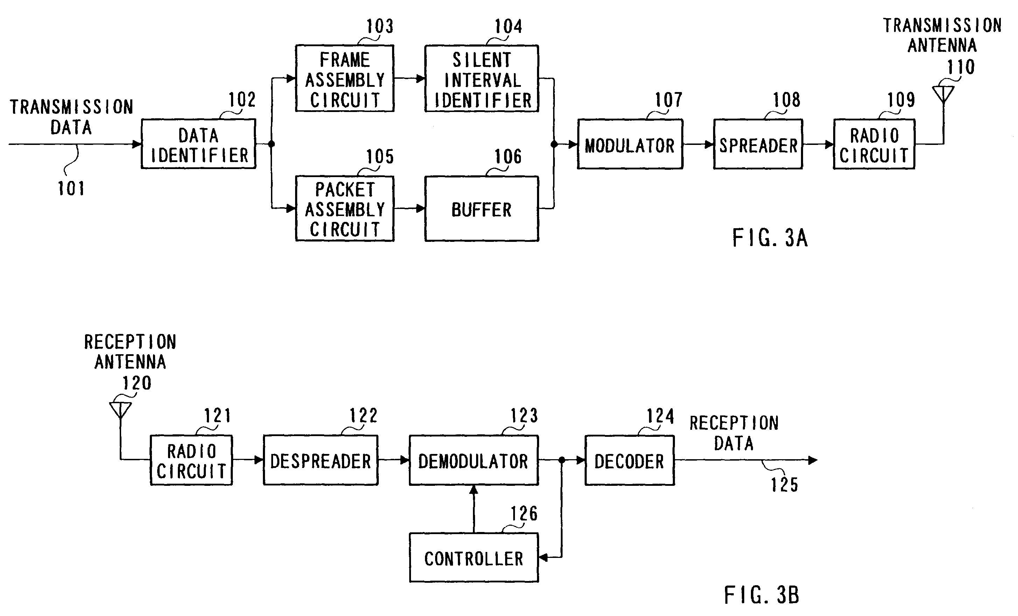

FIG.3A and 3B are block diagrams showing a configuration of a radio communication apparatus according to Embodiment 1 of the present invention. In the following explanations, it is assumed that the transmitter side is a base station and the receiver side is a mobile station.

On the base station side, transmission data 101 consists of voice data and image data, etc. which are coded with error correction by convolutional codes etc.

Data identifier 102 identifies whether transmission data 101 is voice data or non-voice data such as image data based on, for example, the transmission rate and divides the data accordingly.

By the way, voice data is normally input to the radio communication apparatus through a microphone etc. provided for the radio communication apparatus and image data etc. is input from an external apparatus to the radio communication apparatus via a connection terminal etc. provided for the radio communication apparatus. Therefore, it is also possible to adopt a configuration in which voice data is directly input to frame assembly circuit 103 and image data etc. is directly input to packet assembly circuit 105 without especially providing data identifier 102.

Frame assembly circuit 103 assembles voice data into frames. Silent interval identifier 104 identifies an interval during which no voice data is input, that is, a silent interval. Packet assembly circuit 105 assembles non-voice data into packets. Buffer 106 temporarily stores packets and outputs these packets by adjusting the interval between packets.

Modulator 107 modulates frames and packets. Spreader 108 spreads the modulated frames and packets. Radio circuit 109 performs predetermined radio processing on the spread frames and packets. The frames and packets subjected to radio processing are transmitted from transmission antenna 110.

Then, the configuration of buffer 106 is explained.

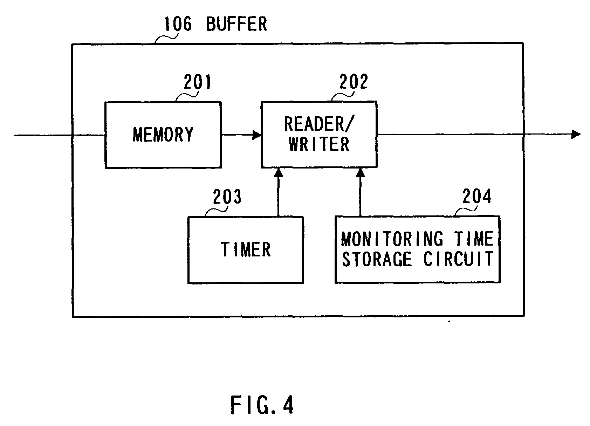

FIG.4 is a block diagram showing a configuration of the buffer of the radio communication apparatus according to Embodiment 1 of the present invention.

In buffer 106, Memory 201 stores packets output to buffer 106 in the order these packets are output. Reader/writer 202 reads packets one by one from memory 201 according to the time set in timer 203 and the time set in monitoring time storage circuit 204, and outputs these packets to modulator 107. Time setting in timer 203 is performed in such a way that a monitoring time is set at a predetermined time interval. A monitoring time determined according to the communication system is preset in monitoring time storage circuit 204.

On the mobile station side, a signal received from reception antenna 120 is subjected to predetermined radio processing by radio circuit 121 and despread by despreader 122. The despread data is demodulated by demodulator 123 and decoded by decoder 124, resulting in reception data 125 such as voice data and image data, etc.

Controller 126 detects a control signal transmitted from the base station notifying the mobile station of a monitoring time. When controller 126 detects the control signal notifying the monitoring time, controller 126 controls demodulator 123 in such a way as to demodulate control signals of different channels.

As shown above, during a monitoring time, the mobile station switches between demodulation channels in demodulator 123 and demodulates a control signal transmitted from another base station using perch channels etc. This allows the mobile station to check the control signal transmitted from the other base station during the monitoring time.

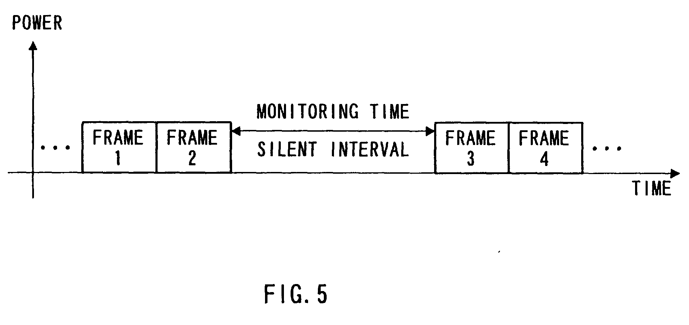

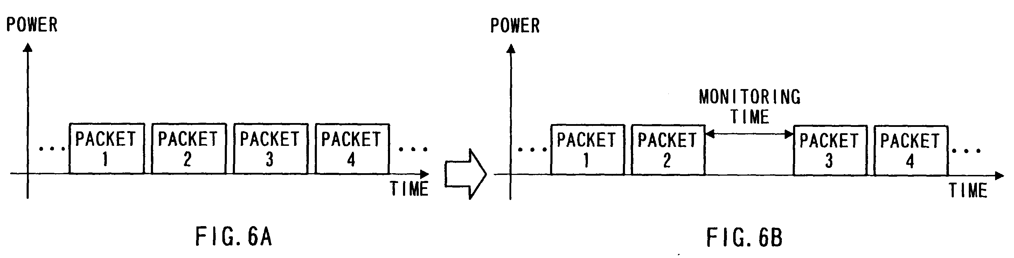

Then, the operation of the radio communication apparatus of the present embodiment is explained using FIG.5, FIG.6A and FIG.6B. FIG.5 illustrates a state of frames when a monitoring time is generated between frames using the radio communication apparatus of Embodiment 1 of the present invention and FIG.6A and FIG. 6B illustrate a state of packets when a monitoring time is generated between packets using the radio communication apparatus according to Embodiment 1 of the present invention.

First, a case of voice data is explained using FIG.5. The voice data selected by data identifier 102 is assembled into frames 1 to 4 as shown in FIG.5 by frame assembly circuit 103. The assembled frames are output to silent interval identifier 104 one by one, frame 1 first.

Silent interval identifier 104 identifies the interval of each frame output from frame assembly circuit 103. In the case that there is a free time interval between frames output, silent interval identifier 104 identifies the free time interval as a silent interval. Since a free time interval exists between frame 2 and frame 3 in FIG.5, silent interval identifier 104 identifies the free time interval as a silent interval. The silent interval identifier 104 outputs a control signal to modulator 107 instructing the mobile station that the silent interval should be used as the monitoring time.

That control signal is modulated by modulator 107, spread by spreader 108, subjected to predetermined radio processing by radio circuit 109 and then transmitted from transmission antenna 110. By means of this control signal, the mobile station detects that there is a silent interval, that is, a monitoring time between frames and checks a control signal sent from the other base station during the monitoring time.

As shown above, the present embodiment achieves the following effect by using a silent interval as a monitoring time for voice data:

That is, the conventional compressed mode method of creating a monitoring time by temporarily reducing a spreading factor would increase power of the frames for which the spreading factor was reduced in order to prevent deterioration of the communication quality. Therefore, the frames with increased power become interference in communications with other mobile stations, and cause the deterioration of communication qualities of the communications with other mobile stations.

On the other hand, the present embodiment uses a silent interval as a monitoring time, and thus eliminates the need for generating a monitoring time by reducing a spreading factor. Eliminating the need for increasing the power of frames, the present embodiment allows a monitoring time to be generated without interfering with communications carried out by other mobile stations.

Furthermore, the conventional compressed mode would require a spreading factor of frames to be temporarily reduced to generate a monitoring time and further the power of the frames for which the spreading factor was reduced to be increased to prevent deterioration of the communicating quality.

In contrast, the present embodiment uses a silent interval as a monitoring time, making it possible to generate a monitoring time while keeping the communication quality constant without requiring special processing for each frame.

Then, a case of non-voice data such as image data, etc. is explained using FIG.6A and 6B.

Non-voice data selected by data identifier 102 is assembled by packet assembly circuit 105 into packets 1 to 4 as shown in FIG. 6A. The assembled packets are output to buffer 106 one by one, packet 1 first.

Buffer 106 temporarily stores the output packets in memory 201. Every time a period of time set in timer 203 expires, reader/writer 202 outputs the packets stored in memory 201 to modulator 107 at a time interval set in monitoring time storage circuit 204.

As shown in FIG.6A, in the case that the period of time set in timer 203 expires when reader/writer 202 reads packet 2 from memory 201 and outputs to modulator 107, reader/writer 202 outputs packet 2, waits for a no-transmission interval corresponding to the monitoring time, and then outputs packet 3, to modulator 107 as shown in FIG.6B. Timer 203 is reset every time the set period of time expires.

The present embodiment allows the interval for generating a monitoring time to be adjusted by changing the time to be set in timer 203 according to the communication system. The present embodiment also allows a monitoring time to be adjusted by changing the time set in monitoring time storage circuit 204.

Reader/writer 202 outputs to modulator 107 a control signal notifying the mobile station that a monitoring time has been generated. That control signal is modulated by modulator 107, spread by spreader 108, subjected to predetermined radio processing by radio circuit 109 and then transmitted to the mobile station from transmission antenna 110. The mobile station detects by means of the control signal that there is a monitoring time and checks a control signal sent from the other base station during the monitoring time.

As shown above, for non-voice data such as image data etc., the present embodiment allows a monitoring time to be generated by providing no-transmission intervals between packets, making it possible to generate a monitoring time without any special processing such as spreading each packet with a temporarily reduced spreading factor.

Non-voice data is transmitted through packet communications in the first place. Therefore, although the packet transmission efficiency somehow drops, providing no-transmission intervals each corresponding to the monitoring time between packets does not cause the deterioration of communication qualities unlike voice data of which the communication qualities deteriorate by providing no-transmission intervals between frames.

### (Embodiment 2)

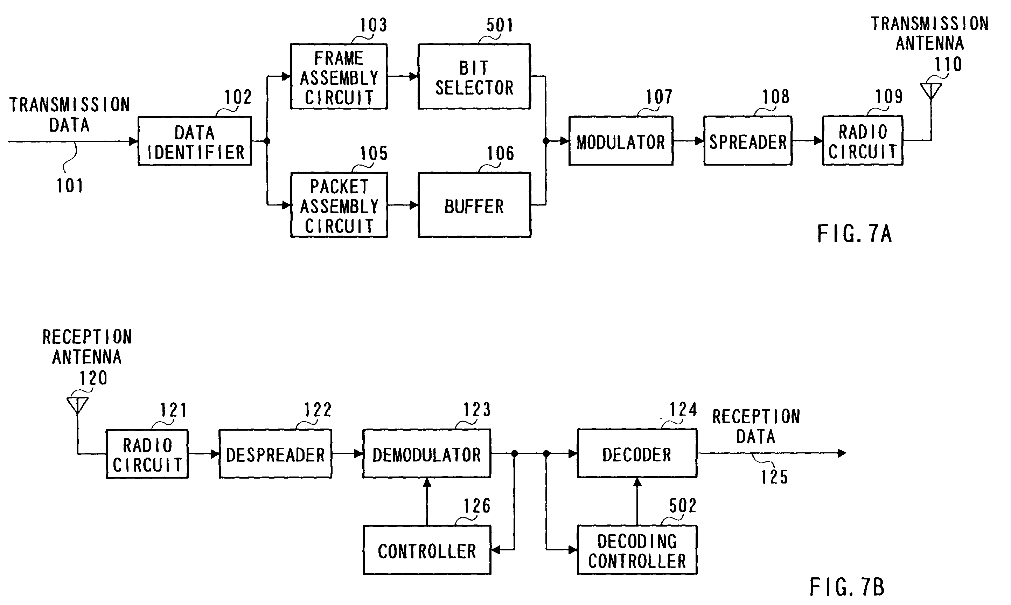

Then, Embodiment 2 of the present invention is explained. FIG.7A and FIG.7B are block diagrams showing a configuration of the radio communication apparatus according to Embodiment 2 of the present invention.

The configuration of the radio communication apparatus of the present embodiment differs from the configuration of the radio communication apparatus of Embodiment 1 in that silent interval identifier 104 is replaced by bit selector 501 on the transmitter side and decoding controller 502 is added on the receiver side. The components with the same configuration as that in Embodiment 1 are assigned the same numbers as in FIG.3A and FIG.3B and their explanations are omitted.

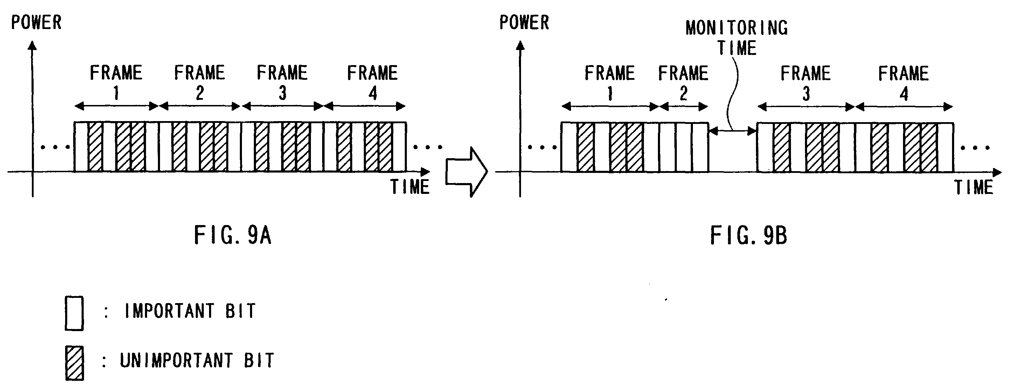

The voice data selected by data identifier 102 is assembled into frames 1 to 4 as shown in FIG.9A. The assembled frames are output to bit selector 501 one by one, frame 1 first.

In FIG.9A and FIG.9B, of the voice data included in each frame, the light-colored bits represent important bits and dark-colored bits represent unimportant bits. Here the " important bits" refer to the bits without which it is impossible to decode voice data at the mobile station and the "unimportant bits" refer to the bits without which it is still possible to decode voice data though the communication quality somehow deteriorates at the mobile station. Here, suppose the array patterns of the important bits and unimportant bits are predetermined according to the voice coding system.

Bit selector 501 selects only the important bits from the error-correction coded voice data included in each frame at a certain timing indicated when a period of time set in a timer attached to bit selector 501 expires, and outputs frames to modulator 107. In other words, bit selector 501 thins out unimportant bits and outputs the frames after thinning-out to modulator 107.

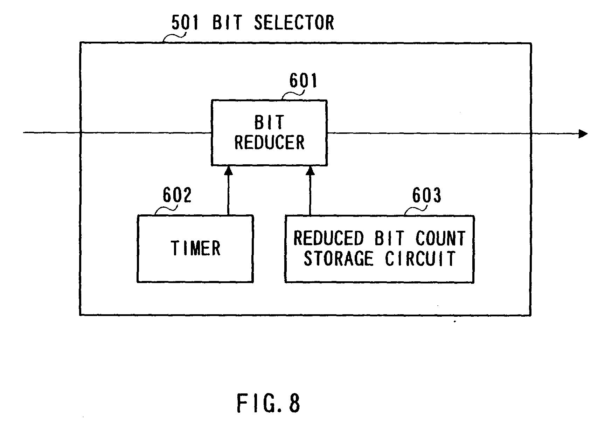

Then, the configuration of bit selector 501 is explained. FIG. 8 is a block diagram showing a configuration of bit selector 501 of the radio communication apparatus according to Embodiment 2 of the present invention.

In bit selector 501, bit reducer 601 thins out unimportant bits in a frame according to the bit array patterns of important bits and unimportant bits, and outputs the frame after thinning-out to modulator 107. In timer 602, a predetermined time is set so that a monitoring time is generated at the predetermined time interval. In reduced bit count storage circuit 603, the count of thinned-out bits is preset according to a monitoring time determined by the communication system.

As shown in FIG.9A, in the case that the period of time set in timer 602 expires when frame 2 is output to bit reducer 601, bit reducer 601 thins out from frame 2 unimportant bits corresponding to the bit count set in reduced bit count storage circuit 603 and outputs the frame after thinning-out to modulator 107 as shown in FIG.9B. Thus, bit reducer 601 shortens the frame length of frame 2 by thinning out unimportant bits from frame 2, and thereby generates a no-transmission interval between frame 2 and frame 3 to provide the monitoring time. Timer 602 is reset every time the set period of time expires.

The present embodiment allows the interval for generating a monitoring time to be adjusted by changing the time set in timer 602 according to the communication system. The present embodiment also allows the monitoring time to be adjusted by changing the bit count set in reduced bit count storage circuit 603.

Bit reducer 601 outputs to modulator 107 a control signal notifying the mobile station that a monitoring time has been generated by thinning out unimportant bits. The control signal is modulated by modulator 107, spread by spreader 108, subjected to predetermined radio processing by radio circuit 109 and transmitted from transmission antenna 110.

On the mobile station side, decoding controller 502 detects the control signal above transmitted from the base station. Then, decoding controller 502 detects that unimportant bits have been thinned out from the reception data and controls decoder 124 so that the reception data is decoded only with important bits.

As shown above, the mobile station switches between demodulation channels in demodulator 123 during a monitoring time and demodulates signals, which allows the mobile station to check the control signal transmitted from the other base station using perch channels, etc. during the monitoring time. Furthermore, the mobile station can decode the reception data only composed of important bits.

As shown above, the present embodiment allows a monitoring time to be generated by shortening the frame length by thinning out the unimportant bits in a frame and providing no-transmission intervals between frames. Thus, the present embodiment eliminates the need for reducing a spreading factor to generate a monitoring time, hence the need for increasing the power of frames. In this way, the present embodiment allows a monitoring time to be generated without interfering with communications carried out by other mobile stations.

The present embodiment explained the case that bits indispensable for decoding as voice data are regarded as important bits. However, the present invention is not limited to this; the important bits can be changed according to the type of signals to be transmitted as appropriate.

Furthermore, in the present embodiment, it is also possible to adjust a monitoring time by changing the level of importance of important bits as appropriate. More specifically, in the case that it is preferable to have a relatively longer monitoring time, this requirement is met by setting high the level of importance of important bits and increasing the number of bits to be thinned out. On the contrary, in the case that it is preferable to have a relatively shorter monitoring time, this requirement is met by setting low the level of importance of important bits and decreasing the number of bits to be thinned out. Thus, the monitoring time can be adjusted by adjusting the number of bits to be thinned out because in order for reception data to be correctly decoded at the mobile station, the number of unimportant bits required changes according to the level of importance of important bits. That is, this is because the lower the level of importance of important bits, the more unimportant bits are required in order for the mobile station to correctly decode reception data.

The radio communication apparatuses according to Embodiments 1 and 2 above can be applied to a mobile station apparatus and base station apparatus in a CDMA radio communication system.

For convenience of explanations, Embodiments 1 and 2 above explained the base station on the transmitting side and mobile station on the receiving side, but the present invention is also applicable to a mobile station on the transmitting side and base station on the receiving side.

As explained above, the present invention allows a monitoring time to be generated with a simple apparatus configuration without deteriorating the communication quality of communications carried out by other mobile stations.

The present invention is not limited to the above described embodiments, and various variations and modifications may be possible without departing from the scope of the present invention.

This application is based on the Japanese Patent Application No.HEI 11-094134 filed on March 31, 1999, entire content of which is expressly incorporated by reference herein.

## Claims

1. A radio communication apparatus comprising:
a detector(104) that detects a time during which there is no data to be transmitted as a monitoring time; and
a transmitter(104-109) that based on the detection result, transmits a signal notifying the other end of communication of a presence of the monitoring time.

2. A radio communication apparatus comprising:
a monitoring time generator(106) that controls a transmission timing of transmission data stored in memory and generates a monitoring time; and
a transmitter(106-109) that transmits a signal notifying the other end of communication that the monitoring time has been generated.

3. The radio communication apparatus according to claim 2, further comprising:
a timer(203) that counts a predetermined time interval at which the monitoring time is generated; and
a monitoring time storage circuit(204) that stores the monitoring time length, wherein the monitoring time generator(106) generates the monitoring time according to the time interval counted by the timer(203) and the monitoring time length stored in the monitoring time storage circuit(204).

4. A radio communication apparatus comprising:
a monitoring time generator(501) that generates a monitoring time by thinning out certain bits of low importance from transmission data; and
a transmitter(501,107-109) that transmits a signal notifying the other end of communication that the monitoring time has been generated.

5. The radio communication apparatus according to claim 4, further comprising:
a timer(602) that counts a predetermined time interval at which the monitoring time is generated; and
a bit count storage circuit(603) that stores the number of bits to be thinned out set according to the monitoring time length, wherein the monitoring time generator(501) generates the monitoring time according to the time interval counted by the timer(602) and the bit count stored in the bit count storage circuit(603).

6. A base station apparatus equipped with a radio communication apparatus, the radio communication apparatus comprising:
a detector(104) that detects a time during which there is no data to be transmitted as a monitoring time; and
a transmitter(104-109) that based on the detection result, transmits a signal notifying the other end of communication of a presence of the monitoring time.

7. A mobile station apparatus that carries out a radio communication with the base station apparatus according to claim 6 and switches between demodulation channels upon reception of the signal notifying the presence of the monitoring time.

8. A base station apparatus equipped with a radio communication apparatus, the radio communication apparatus comprising:
a monitoring time generator(106) that controls a transmission timing of transmission data stored in memory and generates a monitoring time; and
a transmitter(106-109) that transmits a signal notifying the other end of communication that the monitoring time has been generated.

9. A mobile station apparatus that carries out a radio communication with the base station apparatus according to claim 8 and switches between demodulation channels upon reception of the signal notifying that the monitoring time has been generated.

10. A base station apparatus equipped with a radio communication apparatus, the radio communication apparatus comprising:
a monitoring time generator(501) that generates a monitoring time by thinning out certain bits of low importance from transmission data; and
a transmitter(501,107-109) that transmits a signal notifying the other end of communication that the monitoring time has been generated.

11. A mobile station apparatus that carries out a radio communication with the base station apparatus according to claim 10 and switches between demodulation channels upon reception of the signal notifying that the monitoring time has been generated.

12. A mobile station apparatus equipped with a radio communication apparatus, the radio communication apparatus comprising:
a detector(104) that detects a time during which there is no data to be transmitted as a monitoring time; and
a transmitter(104-109) that based on the detection result, transmits a signal notifying the other end of communication of a presence of the monitoring time.

13. A base station apparatus that carries out a radio communication with the mobile station apparatus according to claim 12 and switches between demodulation channels upon reception of the signal notifying the presence of the monitoring time.

14. A mobile station apparatus equipped with a radio communication apparatus, the radio communication apparatus comprising:
a monitoring time generator(106) that controls a transmission timing of transmission data stored in memory and generates a monitoring time; and
a transmitter(106-109) that transmits a signal notifying the other end of communication that the monitoring time has been generated.

15. A base station apparatus that carries out a radio communication with the mobile station apparatus according to claim 14 and switches between demodulation channels upon reception of the signal notifying that the monitoring time has been generated.

16. A mobile station apparatus equipped with a radio communication apparatus, the radio communication apparatus comprising:
a monitoring time generator(501) that generates a monitoring time by thinning out certain bits of low importance from transmission data; and
a transmitter(501,107-109) that transmits a signal notifying the other end of communication that the monitoring time has been generated.

17. A base station apparatus that carries out a radio communication with the mobile station apparatus according to claim 16 and switches between demodulation channels upon reception of the signal notifying that the monitoring time has been generated.

18. A radio communication method comprising the steps of:
detecting a time during which there is no data to be transmitted as a monitoring time; and
transmitting, when the monitoring time is detected, a signal notifying the other end of communication of a presence of the monitoring time.

19. A radio communication method comprising the steps of:
controlling the transmission timing of transmission data stored in memory and generating a monitoring time; and
transmitting a signal notifying the other end of communication that the monitoring time has been generated.

20. A radio communication method comprising the steps of:
generating a monitoring time by thinning out certain bits of low importance from transmission data; and
transmitting a signal notifying the other end of communication that the monitoring time has been generated.
